# EUROPEAN PATENT SPECIFICATION

(11) **EP 2 607 645 B1**
(45) Date of publication and mention of the grant of the patent: **28.10.2015**
(21) Application number: 12198407.4
(22) Date of filing: 20.12.2012
(51) Int. Cl.: F02B 37/20, F02D 41/02, F02D 41/00

(54) **Compression ignition engine turbo lag reduction system**
System zur Turbolochverringerung von Selbstzündungsmotoren
Système de réduction de retard de turbo de moteur à allumage par compression

(30) Priority: 21.12.2011 GB 201121965
(43) Date of publication of application: 26.06.2013
(73) Proprietor: Nissan Motor Manufacturing (UK) Ltd., Cranfield Bedfordshire MK43 0DB (GB)
(72) Inventor: Alonso, Marcos, 08040 Barcelona (ES)

(56) References cited:
- EP-A1- 1 637 706
- WO-A1-01/59272
- WO-A1-2004/090305
- WO-A1-2007/069994
- DE-A1-102006 023 469
- GB-A- 2 292 587
- JP-A- 2007 198 227
- US-A1- 2011 131 957

## Description

### Technical Field of the Invention

The present invention relates to turbo lag reduction systems for turbocharged compression ignition engines; and in particular to such systems including sensors and a controller arranged to anticipate a need for enhanced turbo boost; and a forward facing camera and image processing system. The invention also relates to a method of operating turbocharged compression ignition engine turbo lag reduction systems.

### Background to the Invention

Diesel engine systems incorporating a turbocharger to improve performance of the engine by increasing the mass of air entering the engine are well known. A turbocharger includes a turbine fluidly connected with an exhaust manifold of the engine so as to be driven by the exhaust gases. The turbine drives a compressor which compresses ambient air and directs it into an intake manifold of the engine.

A common problem with turbocharged compression ignition engine systems is turbo lag, sometimes also referred to as turbo delay. Turbo lag is the time delay between the accelerator being depressed and the exhaust gases accelerating the turbocharger to generate sufficient compressed air to increase engine power. A combination of inertia, friction, and compressor load are the primary contributors to turbo lag. Turbo lag can result in low torque at low engine speeds, the effect being especially noticeable when a vehicle starts to move under relatively high loads; such as, when towing.

A number of systems and methods have been proposed to reduce turbo lag or its effects. For example, it is known to inject compressed air from an auxiliary air tank into the engine intake manifold when the accelerator is depressed, to provide a desired amount of air for the engine until the turbocharger is able to spin up to its full capacity and take over the air delivery demands. It is also known to use a high-speed electric motor to accelerate the turbocharger up to speed before a sufficient flow of exhaust gases is available. Whilst these arrangements are beneficial, there are drawbacks. Using an electric motor to accelerate the turbine increases turbine inertia; and gives rise to technical difficulties in terms of packaging and thermal management of the motor, which is located on or close to the exhaust system. Arrangements for injecting compressed air require additional equipment including a compressor and an auxiliary air tank. This type of arrangement is most suited for use in larger commercial vehicles having an air brake system, where the compressed air for injection into the intake manifold is supplied by the same compressor used to supply air for the braking system.

It is known from race and rally cars to retard engine ignition on upward gearchanges, and to inject additional fuel into the exhaust manifold(s) - either directly, where the fuel is ignited by a spark plug and burned totally in the exhaust; or by overfuelling through the cylinders. In the latter technique, fuel is ignited in the combustion chamber by one or more spark plugs, and burned partly in the cylinder and partly in the exhaust system. This system will keep a turbocharger spinning at high engine speeds, but has a number of drawbacks; including high exhaust emissions due to the retarded ignition; explosion damage to the exhaust manifold and turbocharger, which are not designed as combustion chambers; and high noise levels - hence the informal nickname for this system of "bang bang". It is also suited more to petrol engines than to diesels, as diesel fuel will not readily ignite without compression.

It is, however, known to reduce exhaust emission levels from diesel engines by injecting a mixture of urea and water into the exhaust system between a DPF (diesel particulate filter) and a catalytic converter. This system reduces nitrous oxide and carbon monoxide emissions by a chemical reaction with the urea. The urea is not burned, so there is no significant rise in pressure in the exhaust system. If a turbocharger is fitted to the engine, urea injection will not significantly affect its speed.

There is a requirement then for a turbocharged compression ignition engine turbo lag reduction system which overcomes, or at least mitigates, at least some of the problems of the prior art systems, see for example JP 2007 198227A.

There is also a requirement for an alternative method of operating a turbocharged compression ignition engine turbo lag reduction system which overcomes, or at least mitigates, at least some of the problems of the prior art methods.

Such a system and method will be particularly useful if it is linked to an indication that the vehicle needs enhanced turbocharger boost.

### Summary of the Invention

According to a first aspect of the invention, there is provided a turbo lag reduction system for a compression ignition engine, the engine comprising: an engine housing defining at least one cylinder, an air intake manifold and an exhaust system, each fluidly connected with the at least one cylinder, a turbocharger including a compressor in communication with the air intake manifold and a turbine in communication with the exhaust system, and a primary fuel delivery system for delivering a primary fuel to a combustion chamber of the at least one cylinder; the turbo lag reduction system comprising a control system and a secondary fuel delivery system delivering a secondary fuel directly into the exhaust system upstream of the turbine under control of the control system; wherein the control system comprises a programmable controller and is configured such that, in use, secondary fuel is introduced into the exhaust system only as required; the turbo lag reduction system also comprising a forward facing camera and an associated image processing system; characterized in that: the image processing system is configured to process images from the camera to notify the control system that a red traffic light has turned amber or green; and in that the control system is configured to activate the secondary fuel delivery system when the vehicle is stationary at a set of traffic signals, in response to the signals turning from red to amber or green.

This notification may only be applied when a vehicle speed sensor indicates that the vehicle is stationary, or is travelling below a threshold speed; and/or when an engine speed sensor indicates that the engine is idling. Alternatively or additionally, a sensor may indicate that a vehicle turn signal or direction indicator is illuminated. Alternatively or additionally, a manually operated "enhance boost" switch may be provided. This switch may incorporate an automatic timer, which may, for example, provide enhanced turbo boost for five seconds. The system may also comprise a clutch pedal position sensor, as depression of the clutch on a stationary vehicle indicates that acceleration may be required; and may comprise a gearlever position sensor, which is similarly used to detect when a vehicle at rest may be about to pull away. In a further control option, the gearlever position sensor may be used to detect when the vehicle gearlever is moved to select a lower gear. If this gearchange is combined with illumination of a vehicle indicator, the driver may be planning an overtaking maneouvre, or at least a turn at a junction, followed by acceleration away from said junction. To avoid excessive cornering speed, these sensor inputs could also be combined with input from a throttle position sensor. Finally, a longitudinal vehicle tilt sensor could indicate that a vehicle is travelling uphill. In combination with a downshift in a manual or automatic transmission, this could indicate a requirement for increased turbo boost to enable effective hill climbing.

The engine housing may also be known as an engine cylinder block.

The secondary fuel delivery system may comprise at least one fuel injector, mounted to the exhaust system and configured to direct the secondary fuel directly into the exhaust system. The engine housing may define a plurality of cylinders and the exhaust system may comprise an exhaust manifold having a plurality of branches fluidly connecting the cylinders with a combined flow path in the exhaust system. In this case, the secondary fuel system may comprise at least one fuel injector for supplying the secondary fuel directly into the combined flow path. Alternatively, the secondary fuel system may comprise at least one fuel injector for directing the secondary fuel directly into at least one branch of the manifold. The secondary fuel delivery system may comprise a plurality of fuel injectors for directing the secondary fuel into at least two branches of the exhaust manifold. In one embodiment, the secondary fuel delivery system comprises a plurality of fuel injectors configured to direct the secondary fuel into each branch of the manifold.

The secondary fuel delivery system may comprise a secondary fuel tank and a pump for pumping the secondary fuel from the secondary fuel tank to at least one fuel injector.

The control system may comprise a programmable controller; and may be configured such that, in use, secondary fuel is introduced into the exhaust system only under certain operating conditions. The controller may be programmed such that, in use, the secondary fuel is introduced into the exhaust system when the engine is idling. The control system may comprise at least one user input to enable a user to selectively activate and deactivate the turbo lag reduction system. The control system may be, or form part of, an engine management control unit or engine management system.

In accordance with a second aspect of the invention, there is provided a method of operating a turbocharged compression ignition engine turbo lag reduction system, wherein the engine comprises an engine housing defining at least one cylinder, an air intake manifold and an exhaust system, each fluidly connected with the at least one cylinder, a turbocharger including a compressor in communication with the air intake manifold and a turbine in communication with the exhaust system, and a primary fuel delivery system for delivering a primary fuel to a combustion chamber of the at least one cylinder; the method comprising using a secondary fuel delivery system to directly introduce a secondary fuel into the exhaust system upstream of the turbine as required such that the secondary fuel is combusted in the exhaust system, accelerating the exhaust gases and driving the turbine; characterized in that the turbo lag reduction system also comprises a forward facing camera and an associated image processing system, the image processing system being configured to recognize a green or amber traffic light; characterized in that: the turbo lag reduction system further comprises a control system, the control system being configured to activate the secondary fuel delivery system when the vehicle is stationary at a set of traffic lights, in response to the signals turning from red to amber or green.

The secondary fuel delivery system may comprise at least one fuel injector mounted to the exhaust system; and the method may comprise supplying the secondary fuel directly into the exhaust system through the at least one fuel injector. The engine housing may define a plurality of cylinders, and the exhaust system may comprise an exhaust manifold having a plurality of branches fluidly connecting the cylinders with a combined flow path in the exhaust system. In which case, the method may comprise using at least one fuel injector to direct the secondary fuel into the combined flow path. Alternatively, the method may comprise using at least one fuel injector to direct the secondary fuel into at least one branch of the manifold. The secondary fuel delivery system may comprise a plurality of fuel injectors; and the method may comprise using the injectors to direct fuel into at least two branches of the exhaust manifold. In one embodiment, the method comprises using the secondary fuel injectors to direct the secondary fuel into each of the branches of the manifold.

The secondary fuel may be combusted in the exhaust system substantially only when an exhaust valve of the at least one cylinder is open, to ensure a good supply of combustion air. In a multi-cylinder engine where the secondary fuel is injected into a common flow path in the exhaust, injection of the secondary fuel into the exhaust system may be timed so that the secondary fuel is combusted in the exhaust substantially only when at least one of the exhaust valves is open. In a multi-cylinder engine where the secondary fuel is injected into at least one branch of an exhaust manifold, injection of secondary fuel into any given branch of the exhaust manifold may be timed so that the secondary fuel is combusted in the branch substantially only when the exhaust valve of the cylinder with which the branch is fluidly connected is open.

In accordance with a third aspect of the invention, there is provided a vehicle having a turbocharged compression ignition engine turbo lag reduction system according to the first aspect of the invention and/or in which the method of the second aspect of the invention is carried out.

### Detailed Description of the Invention

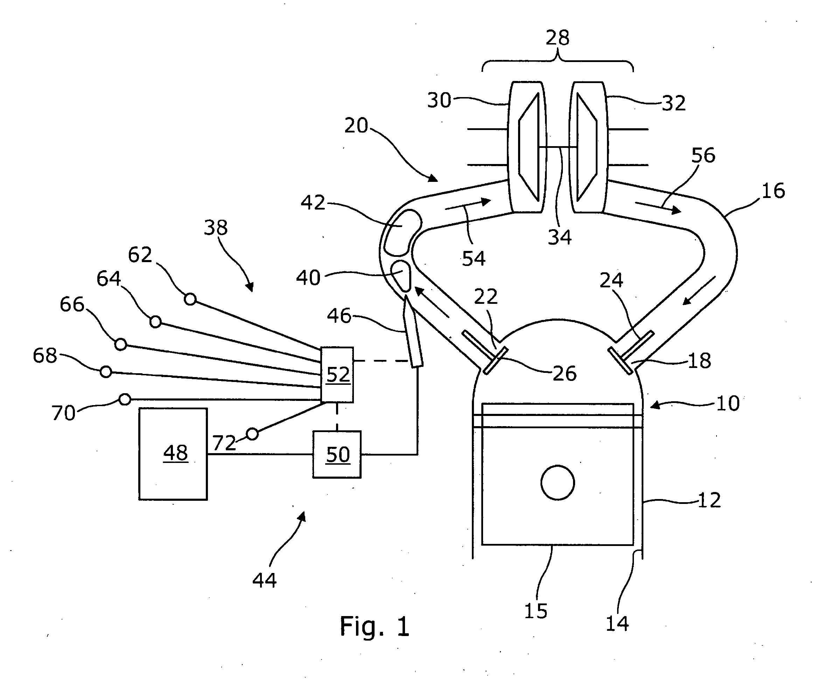

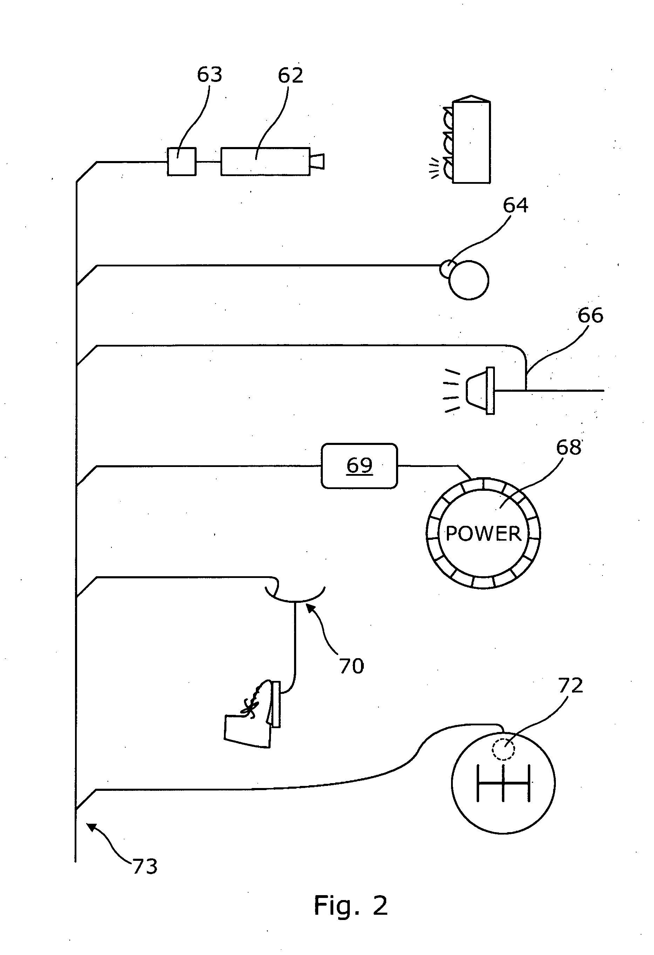

In order that the invention may be more clearly understood an embodiment thereof will now be described, by way of example only, with reference to Fig. 1, which is a schematic cross-sectional representation of part of a compression ignition engine fitted with a turbo lag reduction system in accordance with an embodiment of the invention; and Fig. 2, which is a figurative view of various external sensing means to the turbo lag reduction system.

As illustrated in Fig. 1, a compression ignition engine 10 comprises a housing 12 defining at least one cylinder 14 containing a piston 15. An air intake manifold 16 is fluidly connected with an inlet port 18 of the cylinder and an exhaust system 20 is fluidly connected with an outlet port 22 of the cylinder. Inlet and exhaust valves 24, 26 for opening and closing the inlet and exhaust ports 18, 22 respectively are provided in the usual manner. Valves 24 and 26 are opened and closed by a conventional valve train (not shown).

A turbocharger 28 includes a turbine 30 connected to a compressor 32 by a drive shaft 34. The turbine 30 is fluidly connected with the exhaust system 20 so that it is driven by the exhaust gases. The compressor 32 is driven by the turbine 30 through the shaft 34, and is fluidly connected with the intake manifold 16 so as to compress ambient air and to direct it through the intake manifold to the cylinder. An intercooler (not shown) may also be fitted in the engine intake tract.

Although not shown in the drawing, the compression ignition engine 10 also includes a primary fuel delivery system for delivering a primary fuel, typically diesel, to a combustion chamber of the at least one cylinder for combustion. The combustion chamber may be defined in the top of the piston, or in the cylinder head; or a combination of both, as is well known in the art.

The primary fuel delivery system is conventional, and may typically comprise: a fuel tank for the primary fuel; an injector for directing the primary fuel into the cylinder combustion chamber: and at least one pump for pumping the fuel from the primary fuel tank to the injector. The details of the primary fuel delivery system are not essential to the present invention, which can be applied to compression ignition engines having any suitable fuel delivery arrangement for the primary diesel fuel; including direct and indirect injection arrangements.

As so far described, the compression ignition engine is conventional. In accordance with the present invention, the compression ignition engine turbo lag reduction system 38 reduces turbo lag by introducing a secondary fuel 40 into the exhaust system 20 upstream of the turbine 30 when the engine is idling, or when otherwise desired. The secondary fuel is combusted in a combustion area 42 in the exhaust system, also upstream of the turbine 20. Combustion of the secondary fuel 40 in the exhaust system accelerates the exhaust gases which drive the turbine 30, and hence the compressor 32. When used whilst the engine 10 is idling, combustion of the secondary fuel in the exhaust results in the turbine being driven at a faster speed than would be the case in a conventional turbocharged compression ignition engine under the same operating conditions.

The turbo lag reduction system 38 includes a secondary fuel delivery system 44 having at least one fuel injector 46 mounted to the exhaust system 20 to direct the secondary fuel into the exhaust system upstream of the turbine 30, a secondary fuel tank 48 and a pump 50 for pumping the fuel from the tank to the injector. The turbo lag reduction system 38 includes a control system 52 for controlling operation of the secondary fuel delivery system 44. The control system may regulate operation of the pump 50 and/or the injector 46 as required. The control system 52 will typically comprise a programmable control unit and may be, or form part of, an engine control unit and/or engine management system that manages the engine's overall operation.

The control system 52 may also comprise user inputs that enable a driver to selectively activate and deactivate the turbo lag reduction system 38 and/or to change one or more of its operating parameters; and may also use sensor inputs. Such inputs are, according to the invention, sourced from a forwards facing camera and image processing system, shown figuratively at 62; and may be sourced from a vehicle speed sensor 64; an indicator switch input 66; a manual boost switch 68, which may incorporate a timer; a clutch pedal sensor 70; and a gearshift position sensor 72.

In a typical mode of operation, the lag reduction system 38 operates to deliver the secondary fuel 40 for combustion in the exhaust system when the engine is idling and the vehicle is stopped. Delivery of the secondary fuel is timed so that the secondary fuel 40 is combusted wholly, or at least predominantly, whilst the exhaust valve 26 is open. This enables combustion of the secondary fuel to accelerate the flow of exhaust gases 54 to the turbine 30. Injection of the secondary fuel may commence just before the exhaust valve opens if desired; and the timing can be adjusted to obtain optimal performance for any given engine and/or secondary fuel, and/or to take into account specific operating conditions.

Whilst the turbo lag reduction system 38 is operative and the secondary fuel is being combusted in the exhaust system, the turbocharger 28 provides an augmented supply of compressed intake air 56. Consequently, the engine turbo lag reduction system is able to deliver an increased torque quickly in response to actuation of the accelerator, with no delay; or with only minimal delay. When the accelerator is depressed, torque output can be controlled by regulating the amount of primary fuel injected into the combustion chamber of the cylinder; as there is already sufficient intake air available. Combustion of the secondary fuel 40 in the exhaust system 20 to reduce turbo lag is typically only required when the engine 10 is idling and during initial stages of acceleration. Once the flow of exhaust gases from the cylinder is sufficient to drive the turbine 30 at the required speed without further assistance, the control system 52 shuts down delivery of the secondary fuel 40 into the exhaust system 20.

The control system 52 monitors the operation of the engine 10 and of the vehicle via sensors in a manner known in the art, and is programmed to activate the secondary fuel delivery system 44 when certain operating conditions are met. For example, the control system 52 may be programmed to activate the secondary fuel delivery system whenever the engine is idling and the vehicle is stopped. However, this may not make the most efficient use of the secondary fuel. Use of the lag reduction system is of particular advantage when the engine is put under a relatively heavy load, such as when towing or when the vehicle is heavily laden. The control system may have a user input to enable the driver to activate the turbo lag reduction system 38 when they feel it is required; and to deactivate the system at other times.

Alternatively, the control system 52 may be configured to monitor engine performance, and to activate the secondary fuel delivery system 44 only when the engine is being placed under load conditions at or above a predetermined threshold level. In addition, or alternatively, the control system 52 may be configured to predict when a demand for increased torque is likely to arise, and to activate the secondary fuel delivery system 44 accordingly. In a manual transmission vehicle that is idling and stationary, the selection of a gear and/or depression of the clutch are often precursors to the engine being required to deliver torque as the driver subsequently pulls away. Thus, rather than delivering the secondary fuel 40 at all times whilst the engine is idling and the vehicle is stopped, the control system 52 could be configured to activate the secondary fuel delivery system when the engine is idling and the vehicle is stopped; but only also in response to a gear being selected and/or the clutch pedal being depressed.

For a vehicle with automatic transmission, the driver will usually take their foot off the brake pedal before depressing the accelerator to pull away. In this situation, the control system 52 could be configured to activate the secondary fuel delivery system 44 when the driver releases the brake pedal whilst the engine is idling and the vehicle is stationary. The brake light switch could be used as a sensor, providing an input to the control system when the brake lights are extinguished.

Alternatively or additionally, the control system 52 may be configured to detect when the driver takes the automatic transmission out of a park mode into a drive mode (forward or reverse) as an indication that a requirement for increased torque is likely to arise; and to then activate the secondary fuel delivery system 44. According to the invention, the control system 52 is configured to activate the secondary fuel delivery system 44 when the vehicle is stationary at a set of traffic signals in response to the signals turning from red to amber or green. The control system 52 in this case comprises a traffic signal camera system which is configured to recognize a green or amber light. It will be appreciated that there are numerous ways in which the control system 52 can be configured to make efficient use of the secondary fuel, whilst reducing turbo lag to an acceptable level.

Figure 2 is a figurative view showing how a number of sensors could be used to provide data input to the control system 52 via a wiring loom or vehicle CANbus 73. From the top to the bottom of the Figure, a forward facing camera 62 and image processing system 63 generate a signal when a traffic light turns green; a vehicle speed sensor 64 generates a signal when the vehicle stops; while 66 represents a signal generated when a vehicle indicator is switched on. Numeral 68 denotes a manual "enhanced boost" button, which could have a spring return (rather than "click on - click off") and a timer 69 to limit use of secondary fuel. Numeral 70 denotes a clutch pedal travel sensor; while 72 denotes a gearlever position sensor, shown in a suitable position for a manual gearshift.

The secondary fuel 40 is a different fuel from the primary diesel fuel as the conditions in the exhaust system 20 are not suitable to cause diesel to combust, there being insufficient pressure and temperature. Accordingly, an appropriate secondary fuel capable of being combusted in the exhaust system must be selected. Such a fuel should have a low autoignition point and be capable of burning at relatively low pressure. Its calorific value is not important, but it must not produce high levels of critical emissions, such as nitrous oxides or carbon monoxide. A high expansion rate from liquid to burnt gases is essential.

Because the secondary fuel 40 is different from the primary fuel, the primary and secondary fuels must be kept separate from one another. This requires the provision of a secondary fuel tank to store the secondary fuel, a secondary fuel pump and separate fuel lines. It will be appreciated however, that the primary and secondary fuel tanks could be combined in an integral dual tank assembly. Similarly, the primary and secondary fuel pumps could be combined in an integral dual pump unit with separate flow paths for the two fuels. A fuel gauge and an appropriate driver display for the secondary fuel will be provided to enable a driver to monitor levels of the secondary fuel and to re-fill as required.

The gauge for the secondary fuel could be included as a secondary function of the standard fuel gauge for the primary fuel. This function could be provided as an update of old technology, as the 1945 Rover P2 series car allowed the driver to check the engine oil level by pressing a button next to the fuel gauge, which disconnected the fuel level sender from the gauge and connected a corresponding oil level sender to the gauge instead. An appropriate update of this technology could be to site the fuel gauge changeover button on a dashboard-mounted touch screen, or on a steering column stalk as part of the vehicle trip computer control system. Either of these options would allow a standard combi-meter or instrument cluster to be used on vehicles with and without the turbo lag reduction system fitted. As a further alternative option, the level of secondary fuel could be displayed on the fuel gauge for a short period, for example five seconds, after the ignition is turned on; the gauge then reverting to the conventional display of primary fuel level.

For simplicity, Figure 1 illustrates schematically an engine having a single cylinder. Many modern compression ignition engines have multiple cylinders, with three, four and six cylinders or more being commonplace. For a multi-cylinder engine, the exhaust system 20 will typically comprise an exhaust manifold that defines a combined flow path at an outlet end and which has a plurality of branches at the inlet end for fluidly connecting the exhaust ports of the various cylinders to the combined flow path. Typically, the turbocharger turbine 30 is fluidly connected to the combined outlet flow path of the manifold; so that it is driven by the exhaust gases flowing from each of the cylinders. In this type of arrangement, the secondary fuel delivery system 44 may use only a single fuel injector that is configured to deliver the secondary fuel 40 directly into the combined flow path, either in the manifold itself or in an exhaust pipe between the manifold and the turbine 30.

However, in some applications and dependent on the speed of combustion of the fuel, there may be insufficient distance between the turbine and the point at which the manifold branches merge into the combined flow path to enable the fuel 40 to be injected directly into the combined flow path and combusted before reaching the turbine 30. In these situations, or where it is otherwise desirable, the secondary fuel 40 may be injected into one or more of the branches of the manifold. In some applications it may be sufficient to inject the secondary fuel 40 into only one, or some, of the branches. In other applications, the secondary fuel may be injected into all of the branches of the manifold. It will be appreciated that the secondary fuel delivery system 44 can be modified to incorporate an appropriate number of secondary fuel injectors mounted to the branches and connected with the secondary fuel pump as required. Where the secondary fuel 40 is injected into a branch of the manifold, combustion may take place wholly within the branch; or wholly within the combined flow path downstream from the branch; or partially within the branch, and partially within the combined flow stream.

As discussed above, the secondary fuel 40 is combusted whilst the exhaust valve 26 of the cylinder 14 is open in order to accelerate the flow of exhaust gases to the turbine. Where the engine has multiple cylinders 14 and the secondary fuel 40 is injected into a combined flow path in the exhaust system, injection of the secondary fuel is timed to corresponding with the opening of each of the exhaust valves so that the secondary fuel is combusted substantially only when at least one of the exhaust valves is open. Where the engine has multiple cylinders 14 and the secondary fuel 40 is injected into one or more branches of an exhaust manifold, injection of the secondary fuel into any particular branch is timed to correspond with the opening of the exhaust valve 26 of the cylinder to which that branch is fluidly connected.

The above embodiments are described by way of example only. Many variations are possible without departing from the scope of the invention, as defined in the appended claims.

## Claims

1. A turbo lag reduction system (38) for a compression ignition engine (10), the engine comprising:
an engine housing (12) defining at least one cylinder (14), an air intake manifold (16) and an exhaust system (20), each fluidly connected with the at least one cylinder (14), a turbocharger (28) including a compressor (32) in communication with the air intake manifold (16) and a turbine (30) in communication with the exhaust system (20), and a primary fuel delivery system for delivering a primary fuel to a combustion chamber of the at least one cylinder;
and the turbo lag reduction system (38) comprising:
a control system (52) and a secondary fuel delivery system (44) delivering a secondary fuel (40) directly into the exhaust system (20) upstream from the turbine (30) under control of the control system (52); wherein the control system comprises a programmable controller and is configured such that, in use, secondary fuel is introduced into the exhaust system (20) only as required;
the turbo lag reduction system (38) also comprising a forward facing camera (62) and an associated image processing system (63);
**characterized in that**:
the image processing system (63) is configured to process images from the camera to notify the control system that a red traffic light has turned amber or green;
and **in that** the control system (52) is configured to activate the secondary fuel delivery system (44) when the vehicle is stationary at a set of traffic signals, in response to the signals turning from red to amber or green.

2. A turbo lag reduction system (38) as claimed in claim 1, further comprising an engine speed sensor; and wherein the control system (52) is programmed such that, in use, the secondary fuel (40) is introduced into the exhaust system (20) when the engine (10) is idling.

3. A turbo lag reduction system (38) as claimed in claim 1 or claim 2, wherein the detection means comprises a vehicle speed sensor (64).

4. A turbo lag reduction system (38) as claimed in any preceding claim, wherein the detection means comprises an indicator switch input (66).

5. A turbo lag reduction system (38) as claimed in any preceding claim, wherein the detection means comprises a clutch pedal sensor (70) and/or a gearlever position sensor (72).

6. A turbo lag reduction system (38) as claimed in any preceding claim, wherein the turbo lag reduction system (38) also comprises a manual boost switch (68), and the switch incorporates a timer (69).

7. A turbo lag reduction system (38) as claimed in any preceding claim, wherein the secondary fuel delivery system (44) comprises at least one fuel injector (46) mounted to the exhaust system (20) and configured to direct the secondary fuel (40) directly into the exhaust system (20).

8. A turbo lag reduction system (38) as claimed in claim 7, wherein the engine housing (12) defines a plurality of cylinders (14) and the exhaust system (20) comprises an exhaust manifold having a plurality of branches fluidly connecting the cylinders (14) with a combined flow path in the exhaust system (20), the secondary fuel delivery system (44) comprising at least one fuel injector (46) for directing the secondary fuel (40) directly into the exhaust manifold.

9. A turbo lag reduction system (38) as claimed in any preceding claim, wherein the turbo lag reduction system (38) control system (52) comprises a user input to enable a user to selectively activate and deactivate the turbo lag reduction system.

10. A method of operating a turbocharged compression ignition engine turbo lag reduction system (38), wherein the vehicle engine (10) comprises an engine housing (12) defining at least one cylinder (14), an air intake manifold (16) and an exhaust system (20), each fluidly connected with the at least one cylinder (14), a turbocharger (28) including a compressor (32) in communication with the air intake manifold (16) and a turbine (30) in communication with the exhaust system (20), and a primary fuel delivery system for delivering a primary fuel to a combustion chamber of the at least one cylinder (14); the method comprising using a secondary fuel delivery system (44) to directly introduce a secondary fuel (40) into the exhaust system (20) upstream from the turbine (30) as required such that the secondary fuel (40) is combusted in the exhaust system (20), accelerating the exhaust gases and driving the turbine (30); **characterized in that**:
the turbo lag reduction system (38) also comprises a forward facing camera (62) and an associated image processing system (63), the image processing system (63) being configured to recognize a green or amber traffic light;
and **in that**:
the turbo lag reduction system further comprises a control system (52), which activates the secondary fuel delivery system (44) when the vehicle is stationary at a set of traffic signals, in response to the signals turning from red to amber or green.

11. A method as claimed in claim 10, wherein the engine housing (12) defines a plurality of cylinders (14) and the exhaust system (20) comprises an exhaust manifold having a plurality of branches fluidly connecting the cylinders (14) with a combined flow path in the exhaust system (20), the method comprising using at least one fuel injector (46) to direct the secondary fuel (40) into the exhaust manifold.

12. A method as claimed in claim 10 or claim 11, wherein, the secondary fuel (40) is combusted in the exhaust system (20) substantially only when an exhaust valve (26) of the at least one cylinder (14) is open.

13. A method as claimed in claim 12 when dependent on claim 11, wherein each cylinder (14) has an exhaust valve (26) and the injection of secondary fuel (40) into the exhaust system (20) is timed so that the secondary fuel is combusted in the exhaust substantially only when at least one of the exhaust valves (26) is open.

14. A vehicle comprising a compression ignition engine turbo lag reduction system (38) as claimed in any one of claims 1 to 9, and/or in which the method of any one of claims 10 to 13 is carried out.

## Patentansprüche

1. Turbolochreduzierungssystem (38) für einen Kompressionszündungsmotor (10), wobei der Motor Folgendes umfasst:
ein Motorgehäuse (12), definierend wenigstens einen Zylinder (14), einen Luftansaugkrümmer (16) und eine Abgasanlage (20), jedes davon in Fluidverbindung mit dem wenigstens einen Zylinder (14), wobei ein Turbolader (28) einen Verdichter (32), in Verbindung mit dem Luftansaugkrümmer (16), und eine Turbine (30), in Verbindung mit der Abgasanlage (20), und ein primäres Kraftstoffzufuhrsystem zum Zuführen eines Primärkraftstoffs an eine Brennkammer des wenigstens einen Zylinders enthält;
und wobei das Turbolochreduzierungssystem (38) Folgendes umfasst:
ein Steuersystem (52) und ein sekundäres Kraftstoffzufuhrsystem (40), das einen Sekundärkraftstoff (40) direkt in die Abgasanlage (20) stromaufwärts der Turbine (30) unter Steuerung durch das Steuersystems (52) zuführt; wobei das Steuersystem eine programmierbare Steuerung umfasst und derart konfiguriert ist, dass im Einsatz Sekundärkraftstoff nur nach Bedarf in die Abgasanlage (20) eingeführt wird;
wobei das Turbolochreduzierungssystem (38) auch eine nach vorn gerichtete Kamera (62) und ein zugehöriges Bildverarbeitungssystem (63) umfasst;
**dadurch gekennzeichnet, dass**:
das Bildverarbeitungssystem (63) konfiguriert ist, Bilder von der Kamera zu verarbeiten, um dem Steuersystem zu melden, dass eine rote Ampel auf Gelb oder Grün umgeschaltet hat;
und dadurch, dass das Steuersystem (52) konfiguriert ist, wenn das Fahrzeug an einer Ampelanlage steht, das sekundäre Kraftstoffzufuhrsystem (44), als Antwort auf das Umschalten der Signale von Rot auf Gelb oder Grün zu aktivieren.

2. Turbolochreduzierungssystem (38) nach Anspruch 1, ferner umfassend einen Motordrehzahlsensor; und wobei das Steuersystem (52) derart programmiert ist, dass der Sekundärkraftstoff (40) in die Abgasanlage (20) eingeführt wird, wenn der Motor (10) im Leerlauf ist;

3. Turbolochreduzierungssystem (38) nach Anspruch 1 oder 2, wobei das Erfassungsmittel einen Fahrzeuggeschwindigkeitssensor (64) umfasst.

4. Turbolochreduzierungssystem (38) nach einem der vorhergehenden Ansprüche, wobei das Erfassungsmittel einen Anzeigeschaltereingang umfasst (66).

5. Turbolochreduzierungssystem (38) nach einem der vorhergehenden Ansprüche, wobei das Erfassungsmittel einen Kupplungspedalsensor (70) und/oder einen Schalthebelstellungssensor (72) umfasst.

6. Turbolochreduzierungssystem (38) nach einem der vorhergehenden Ansprüche, wobei das Turbolochreduzierungssystem (38) auch einen manuellen Boost-Schalter (68) umfasst und im Schalter ein Zeitmesser (69) integriert ist.

7. Turbolochreduzierungssystem (38) nach einem der vorhergehenden Ansprüche, wobei das sekundäre Kraftstoffzufuhrsystem (44) wenigstens eine Kraftstoffeinspritzdüse (46) umfasst, die an der Abgasanlage (20) angebracht ist und konfiguriert ist, den Sekundärkraftstoff (40) direkt in das Abgassystem (20) zu leiten.

8. Turbolochreduzierungssystem (38) nach Anspruch 7, wobei das Motorgehäuse (12) mehrere Zylinder (14) definiert und die Abgasanlage (20) einen Abgaskrümmer mit mehreren Abzweigungen umfasst, die die Zylinder (14) mit einem kombinierten Strömungsweg in der Abgasanlage (20) in Fluidverbindung bringt, wobei das sekundäre Kraftstoffzufuhrsystem (44) zum Leiten des Sekundärkraftstoffs (40) direkt in den Abgaskrümmer wenigstens eine Kraftstoffeinspritzdüse (40) umfasst.

9. Turbolochreduzierungssystem (38) nach einem der vorhergehenden Ansprüche, wobei das Steuersystem (52) des Turbolochreduzierungssystems (38) eine Benutzereingabe umfasst, um es einem Benutzer zu ermöglichen, das Turbolochreduzierungssystem selektiv zu aktivieren und zu deaktivieren.

10. Verfahren zum Bedienen eines Turbolochreduzierungssystems (38) eines turboaufgeladenen Kompressionszündungsmotors, wobei der Fahrzeugmotor (10) ein Motorgehäuse (12) umfasst, das wenigstens einen Zylinder (14), einen Luftansaugkrümmer (16) und eine Abgasanlage (20) definiert, jedes davon in Fluidverbindung mit dem wenigstens einen Zylinder (14), einem Turbolader (28), enthaltend einen Verdichter (32) in Verbindung mit dem Luftansaugkrümmer (16) und eine Turbine (30) in Verbindung mit der Abgasanlage (20), und ein primäres Kraftstoffzufuhrsystem zum Zuführen eines Primärkraftstoffs an eine Brennkammer des wenigstens einen Zylinders (14); wobei das Verfahren das Verwenden eines sekundären Kraftstoffzufuhrsystems (44) umfasst, um einen Sekundärkraftstoff (40) direkt in die Abgasanlage (20) stromaufwärts der Turbine (30) nach Bedarf derart einzuführen, dass der Sekundärkraftstoff (40) in der Abgasanlage (20) verbrennt, während die Abgase beschleunigt werden und die Turbine (30) angetrieben wird; **dadurch gekennzeichnet, dass**:
das Turbolochreduzierungssystem (38) auch eine nach vorne gerichtete Kamera (62) und ein zugehöriges Bildverarbeitungssystem (63) umfasst, wobei das Bildverarbeitungssystem (63) konfiguriert ist, um eine grüne oder gelbe Ampel zu erkennen;
und dadurch, dass:
das Turbolochreduzierungssystem ferner ein Steuersystem (52) umfasst, das das sekundäre Kraftstoffzufuhrsystem (44) aktiviert, wenn das Fahrzeug an einer Ampelanlage steht, als Antwort auf das Umschalten der Signale von Rot auf Gelb oder Grün.

11. Verfahren nach Anspruch 10, wobei das Motorgehäuse (12) mehrere Zylinder (14) definiert und die Abgasanlage (20) einen Abgaskrümmer mit mehreren Abzweigungen umfasst, der die Zylinder (14) mit einem kombinierten Strömungsweg in der Abgasanlage (20) in Fluidverbindung bringt, wobei das Verfahren das Verwenden von wenigstens einer Kraftstoffeinspritzdüse (46) umfasst, um den Sekundärkraftstoff (40) in den Abgaskrümmer zu leiten.

12. Verfahren nach Anspruch 10 oder 11, wobei der Sekundärkraftstoff (40) in der Abgasanlage (20) im Wesentlichen nur verbrannt wird, wenn ein Auslassventil (26) des wenigstens einen Zylinders (14) offen ist.

13. Verfahren nach Anspruch 12, sofern abhängig von Anspruch 11, wobei jeder Zylinder (14) ein Auslassventil (26) aufweist und die Einspritzung des Sekundärkraftstoffs (40) in die Abgasanlage (20) zeitlich festgelegt ist, sodass der Sekundärkraftstoff im Abgas im Wesentlichen nur verbrannt wird, wenn wenigstens eines der Auslassventile (26) offen ist.

14. Fahrzeug, umfassend ein Turbolochreduzierungssystem (38) eines Kompressionszündungsmotors nach einem der Ansprüche 1 bis 9, und/oder in dem das Verfahren nach einem der Ansprüche 10 bis 13 ausgeführt wird.

## Revendications

1. Système de réduction de décalage de turbo (38) pour un moteur à allumage par compression (10), le moteur comprenant :
un carter de moteur (12) définissant au moins un cylindre (14), un collecteur d'admission d'air (16) et un système d'échappement (20), chacun étant raccordé fluidiquement avec le au moins un cylindre (14), un turbocompresseur (28) incluant un compresseur (32) en communication avec le collecteur d'admission d'air (16) et une turbine (30) en communication avec le système d'échappement (20), et un système de distribution de carburant primaire destiné à distribuer un carburant primaire à une chambre de combustion du au moins un cylindre ;
et le système de réduction de décalage de turbo (38) comprenant :
un système de commande (52) et un système de distribution de carburant secondaire (44) distribuant un carburant secondaire (40) directement dans le système d'échappement (20) en amont de la turbine (30) sous la commande du système de commande (52) ; dans lequel le système de commande comprend une unité de commande programmable et est configuré de sorte que, en utilisation, le carburant secondaire soit introduit dans le système d'échappement (20) uniquement lorsque cela est requis ;
le système de réduction de décalage de turbo (38) comprenant en outre une caméra orientée vers l'avant (62) et un système de traitement d'image associé (63) ;
**caractérisé en ce que** :
le système de traitement d'image (63) est configuré pour traiter des images en provenance de la caméra pour notifier au système de commande le passage d'un feu de signalisation de rouge à l'orange ou vert ;
et **en ce que** le système de commande (52) est configuré pour activer le système de distribution de carburant secondaire (44) lorsque le véhicule est stationnaire au niveau d'un ensemble de feux de signalisation, en réponse au passage des feux du rouge à l'orange ou vert.

2. Système de réduction de décalage de turbo (38) selon la revendication 1, comprenant en outre un capteur de vitesse moteur ; et dans lequel le système de commande (52) est programmé de sorte que, en utilisation, le carburant secondaire (40) soit introduit dans le système d'échappement (20) lorsque le moteur (10) tourne au ralenti.

3. Système de réduction de décalage de turbo (38) selon la revendication 1 ou la revendication 2, dans lequel le moyen de détection comprend un capteur de vitesse de véhicule (64).

4. Système de réduction de décalage de turbo (38) selon l'une quelconque des revendications précédentes, dans lequel le moyen de détection comprend une entrée de commutateur d'indicateur (66).

5. Système de réduction de décalage de turbo (38) selon l'une quelconque des revendications précédentes, dans lequel le moyen de détection comprend un capteur de pédale d'embrayage (70) et/ou un capteur de position de levier de vitesse (72).

6. Système de réduction de décalage de turbo (38) selon l'une quelconque des revendications précédentes, dans lequel le système de réduction de décalage de turbo (38) comprend également un commutateur de survolteur manuel (68), et le commutateur incorpore une minuterie (69).

7. Système de réduction de décalage de turbo (38) selon l'une quelconque des revendications précédentes, dans lequel le système de distribution de carburant secondaire (44) comprend au moins un injecteur de carburant (46) monté sur le système d'échappement (20) et configuré pour diriger le carburant secondaire (40) directement dans le système d'échappement (20).

8. Système de réduction de décalage de turbo (38) selon la revendication 7, dans lequel le carter de moteur (12) définit une pluralité de cylindres (14) et le système d'échappement (20) comprend un collecteur d'échappement ayant une pluralité de branches raccordant fluidiquement les cylindres (14) à une voie d'écoulement combinée dans le système d'échappement (20), le système de distribution de carburant secondaire (44) comprenant au moins un injecteur de carburant (46) destiné à diriger le carburant secondaire (40) directement dans le collecteur d'échappement.

9. Système de réduction de décalage de turbo (38) selon l'une quelconque des revendications précédentes, dans lequel le système de commande (52) du système de réduction de décalage de turbo (38) comprend une entrée utilisateur destinée à permettre à un utilisateur d'activer et de désactiver sélectivement le système de réduction de décalage de turbo.

10. Procédé d'exploitation d'un système de réduction de décalage de turbo (38) d'un moteur à allumage par compression turbocompressé, dans lequel le moteur de véhicule (10) comprend un carter de moteur (12) définissant au moins un cylindre (14), un collecteur d'admission d'air (16) et un système d'échappement (20), chacun étant raccordé fluidiquement avec le au moins un cylindre (14), un turbocompresseur (28) incluant un compresseur (32) en communication avec le collecteur d'admission d'air (16) et une turbine (30) en communication avec le système d'échappement (20), et un système de distribution de carburant primaire destiné à distribuer un carburant primaire à une chambre de combustion du au moins un cylindre (14) ; le procédé comprenant l'utilisation d'un système de distribution de carburant secondaire (44) destiné à introduire directement un carburant secondaire (40) dans le système d'échappement (20) en amont de la turbine (30) comme requis de sorte que le carburant secondaire (40) soit brûlé par combustion dans le système d'échappement (20), accélérant les gaz d'échappement et entraînant la turbine (30) ; **caractérisé en ce que** :
le système de réduction de décalage de turbo (38) comprend également une caméra orientée vers l'avant (62) et un système de traitement d'image associé (63), le système de traitement d'image (63) étant configuré pour reconnaître un feu de signalisation vert ou orange ;
et **en ce que** :
le système de réduction de décalage de turbo comprend en outre un système de commande (52), qui active le système de distribution de carburant secondaire (44) lorsque le véhicule est stationnaire au niveau d'un ensemble de feux de signalisation, en réponse au passage des feux du rouge à l'orange ou vert.

11. Procédé selon la revendication 10, dans lequel le carter de moteur (12) définit une pluralité de cylindres (14) et le système d'échappement (20) comprend un collecteur d'échappement ayant une pluralité de branches raccordant fluidiquement les cylindres (14) à une voie d'écoulement combinée dans le système d'échappement (20), le procédé comprenant l'utilisation d'au moins un injecteur de carburant (46) afin de diriger le carburant secondaire (40) directement dans le collecteur d'échappement.

12. Procédé selon la revendication 10 ou la revendication 11, dans lequel le carburant secondaire (40) est brûlé par combustion dans le système d'échappement (20) sensiblement uniquement lorsqu'une soupape d'échappement (26) du au moins un cylindre (14) est ouverte.

13. Procédé selon la revendication 12 lorsqu'elle dépend de la revendication 11, dans lequel chaque cylindre (14) comporte une soupape d'échappement (26) et l'injection de carburant secondaire (40) dans le système d'échappement (20) est minutée de sorte que le carburant secondaire est brûlé par combustion dans l'échappement sensiblement uniquement lorsqu'au moins une des soupapes d'échappement (26) est ouverte.

14. Véhicule comprenant un système de réduction de décalage de turbo (38) d'un moteur à allumage par compression selon l'une quelconque des revendications 1 à 9, et/ou dans lequel le procédé de l'une quelconque des revendications 10 à 13 est réalisé.
